# EUROPÄISCHE PATENTSCHRIFT

(11) **EP 2 195 124 B1**
(45) Veröffentlichungstag und Bekanntmachung des Hinweises auf die Patenterteilung: **21.11.2012**
(21) Anmeldenummer: 08801838.7
(22) Anmeldetag: 04.09.2008
(51) Int. Cl.: B21B 1/46

(54) **KOMPAKTE FLEXIBLE CSP-ANLAGE FÜR ENDLOS-, SEMI-ENDLOS- UND BATCHBETRIEB**
COMPACT, FLEXIBLE CSP FACILITY FOR CONTINUOUS, SEMI-CONTINUOUS AND BATCH OPERATION
INSTALLATION CSP COMPACTE ET FLEXIBLE POUR UN FONCTIONNEMENT CONTINU, SEMI-CONTINU ET PAR LOTS

(30) Priorität: 13.09.2007 DE 102007043817; 18.09.2007 DE 102007044649; 05.10.2007 DE 102007048116; 04.01.2008 DE 102008003222
(43) Veröffentlichungstag der Anmeldung: 16.06.2010
(73) Patentinhaber: SMS Siemag AG, 40237 Düsseldorf (DE)
(72) Erfinder: SEIDEL, Jürgen, 57223 Kreuztal (DE); SUDAU, Peter, 57271 Hilchenbach (DE); HOF, Hartmut, 57339 Erndtebrück (DE); PETERS, Matthias, 57223 Kreuztal (DE)
(74) Vertreter: Klüppel, Walter
(86) Internationale Anmeldenummer: PCT/EP2008/007238
(87) Internationale Veröffentlichungsnummer: WO 2009/036894

(56) Entgegenhaltungen:
- EP-A- 0 449 004
- EP-A- 0 896 840
- DE-A1-102006 054 932
- US-A- 5 832 985

## Beschreibung

### Technisches Gebiet

Die Erfindung betrifft eine kompakte flexible CSP-Anlage für Endlos-, Semi-Endlos- und Batchbetrieb, wie insbesondere nach dem Oberbegriff von Anspruch 1.

### Stand der Technik

Bei CSP-Anlagen (Continuous Strip Production) wird das Band typischer Weise, wie es der Name auch schon sagt, in einem kontinuierlichen Prozess hergestellt. Dies bedeutet, dass der Gießprozess und der Walzprozess unmittelbar nacheinander aus quasi einer Hitze stattfindet.

Die WO - A 2007073841 offenbart eine CSP-Anlage, bei welcher zwischen der Gießmaschine und der Walzstraße sowohl ein Induktionsofen als auch ein Halteofen vorgesehen ist, um die Dünnbramme auf Temperatur zu halten bzw. die Temperatur etwas zu erhöhen, wobei sowohl der Halteofen als auch der Induktionsofen in Abhängigkeit der Betriebsart aktiviert, deaktiviert bzw. gesteuert oder geregelt wird.

Die EP 0 286 862 A1 offenbart ein Endloswalzen, bei welchem der Gieß- und der Walzprozess direkt gekoppelt sind.

Die DD 282 185 A5 offenbart einen diskontinuierlichen Prozess, bei welchem das Gießen in einer Gießhalle erfolgt, wobei am Ende des Gießens nach

Durchlauf eines Vorwalzgerüsts Coils von Vormaterial erzeugt wird. Diese Coils werden anschließend in die Halle des Walzprozesses transportiert, um dort gewalzt zu werden.

Diese Anlagen haben den Nachteil, dass sie entweder nur im diskontinuierlichen Betrieb oder nur im kontinuierlichen Betrieb gefahren werden können. Bei einem Walzenwechsel ist es bei einem kontinuierlichen Betrieb nicht weiter möglich, den Betrieb aufrecht zu erhalten. Bei einem diskontinuierlichen Betrieb ist es für manche Stahlsorten ungünstig sie derart zu fertigen, weil damit Qualitätseinbußen verbunden sind.

Weiterhin sind diese Anlagen in der Regel sehr lang in ihrer Ausdehnung, was zu einem erheblichen Kostenfaktor in der Fertigung führt.

### Darstellung der Erfindung, Aufgabe, Lösung, Vorteile

Es ist die Aufgabe der vorliegenden Erfindung, eine Anlage der oben genannten Art zu schaffen, welche einen flexiblen Betriebsartenwechsel erlaubt und dennoch relativ kurz baut.

Erfindungsgemäß wird die Aufgabe erreicht, durch eine kompakte flexible CSP-Anlage für Endlos-, Semi-Endlos- und Batchbetrieb mit den Merkmalen von Anspruch 1 in Kombination. Dadurch kann eine flexible Nutzung der Anlage bei einer gleichzeitigen kurzen Bauform realisiert werden.

Dabei ist es weiterhin zweckmäßig, wenn vor der Vorgerüstgruppe ein Ofen, wie beispielsweise ein Tunnelofen, angeordnet ist, welcher auch als Speicher dient.

Auch ist es vorteilhaft, wenn zwischen der Vorgerüstgruppe und der Fertiggerüstgruppe eine Heizeinrichtung, wie beispielsweise eine Induktionsheizung, angeordnet ist.

Weiterhin ist es zweckmäßig, wenn der Coil-Speicher für eine erhöhte Aufnahmemenge an Vorband oder Bramme ausgelegt ist.

Darüber hinaus ist es vorteilhaft, wenn der Coil-Speicher zur Aufnahme von zwei, drei oder mehr Coils ausgelegt ist. Insofern weist der Coil-Speicher eine erhöhte Aufnahmekapazität bei kurzer Anlagenlänge auf.

Auch ist es weiterhin zweckmäßig, wenn der Coil-Speicher thermisch isoliert und/oder beheizbar ist.

Weiterhin ist es vorteilhaft, wenn bei deaktiviertem Coil-Speicher eine Rollgangsabdeckung zur besseren thermischen Isolation des Rollgangs eingesetzt wird. Dadurch lassen sich thermische Verluste minimieren und die aufzuwendende Energie zum Temperieren absenken.

Vorteilhafte Weiterbildungen sind in den Unteransprüchen beschrieben.

### Kurze Beschreibung der Zeichnungen

Nachstehend wird die Erfindung auf der Grundlage von Ausführungsbeispielen anhand der Zeichnungen näher erläutert.

Es zeigen:
- Fig. 1: eine schematische Darstellung einer erfindungsgemäßen Anlage,
- Fig. 2: eine schematische Darstellung einer erfindungsgemäßen Anlage in Seitenansicht,
- Fig. 3: eine schematische Darstellung einer erfindungsgemäßen Anlage der Figur 2 in Aufsicht,
- Fig. 4: eine schematische Darstellung der erfindungsgemäßen Anlage in Seitenansicht für den kontinuierlichen Betriebsmodus,
- Fig. 5: eine schematische Darstellung der erfindungsgemäßen Anlage gemäß Figur 4 in Seitenansicht für den diskontinuierlichen Betrieb oder den Semi-Endlos-Betrieb,
- Fig. 6: eine schematische Darstellung einer erfindungsgemäßen Anlage in Seitenansicht für den kontinuierlichen Betriebsmodus,
- Fig. 7: eine schematische Darstellung der erfindungsgemäßen Anlage gemäß Figur 6 in Seitenansicht für den diskontinuierlichen Betrieb oder den Semi-Endlos-Betrieb,
- Fig. 8: eine schematische Darstellung einer erfindungsgemäßen Anlage in Seitenansicht für den kontinuierlichen Betriebsmodus,
- Fig. 9: eine schematische Darstellung der erfindungsgemäßen Anlage gemäß Figur 8 in Seitenansicht für den diskontinuierlichen Betrieb oder den Semi-Endlos-Betrieb,
- Fig. 10: ein so genannter Coil-Speicher mit erhöhtem Aufnahmevermögen im Seitenansicht, und
- Fig. 11: eine Ansicht des Coil-Speichers nach Fig. 10 von oben.

### Bevorzugte Ausführung der Erfindung

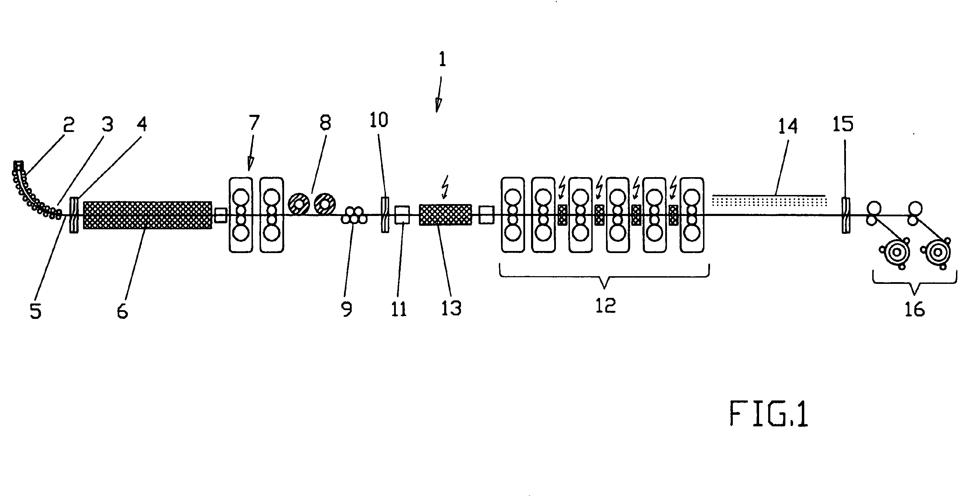

Die Figur 1 zeigt eine schematische Darstellung einer kompakten flexiblen CSP-Anlage 1 für Endlos-, Semi-Endlos- und Batchbetrieb. Die Anlage 1 weist dabei eine Gießmaschine 2 mit einem Casteraustritt 3 auf. Nach dem Casteraustritt 3 ist eine Schere 4 vorgesehen, um den aus dem Casteraustritt 3 austretenden Strang 5 schneiden zu können. Nach der Schere 4 ist ein Ofen 6, wie vorzugsweise ein Tunnelofen, vorgesehen, welcher den Strang 5 auf die gewünschte Temperatur aufheizt. Der Ofen 6 ist somit zwischen dem Casteraustritt 3 und der Schere 4 zum Einen und der nachfolgenden Vorgerüstgruppe 7 zum Anderen angeordnet. Die Vorgerüstgruppe 7 hat im Ausführungsbeispiel der Figur 1 zwei Vorgerüste. Gemäß eines anderen erfindungsgemäßen Gedankens, kann die Vorgerüstgruppe 7 jedoch auch ein oder drei Vorgerüste aufweisen. Bei diesem Ausführungsbeispiel ist nach der Vorgerüstgruppe 7 ein so genannter Coil-Speicher 8 für das Strangmaterial vorgesehen, um das Strangmaterial für den Batchbetrieb zu Coils aufzuwickeln und zwischenzuspeichem. Der Coil-Speicher 8 ist derart ausgelegt, dass er beispielsweise zumindest so viel Strangmaterial aufnehmen und zwischenspeichern kann, dass beispielsweise ein Walzenwechsel bei einem oder mehreren Fertiggerüsten der Fertiggerüstgruppe möglich ist, ohne dass die Gießmaschine 2 gedrosselt oder herunter gefahren werden muss.

Nach der Vorgerüstgruppe 7 und dem Coil-Speicher 8 ist vorteilhaft ein Richtrollensatz 9 vorgesehen. Anschließend kann wiederum eine Schere 10 angeordnet sein. Nach der Schere 10 ist optional ein Kantenheizer 11 vorgesehen, welchem nachgeordnet ein Induktionsofen 13 angeordnet ist. Nach dem Induktionsofen 13 ist die Fertiggerüstgruppe 12, die auch Fertigstraße genannt wird, vorgesehen, welche im Ausführungsbeispiel der Figur 1 sechs Fertiggerüste aufweist. Gemäß eines weiteren erfindungsgemäßen Gedankens ist es auch vorteilhaft, wenn bei der Anordnung von drei Vorgerüsten der Vorgerüstgruppe die Fertiggerüstgruppe 12 beispielsweise fünf Fertiggerüste aufweist.

Im Batch-Betrieb arbeitet die Gießmaschine 2 nicht mehr inline bzw. kontinuierlich mit der Vorgerüstgruppe 7 und der Fertiggerüstgruppe 12. Dies bewirkt ein Walzen in beiden Gerüstgruppen 7, 12 mit erhöhter Walzgeschwindigkeit, was zu geringeren Temperaturverlusten am Vorband und Fertigband führt, was zu Vorteilen führt, da somit in der induktiven Heizung 13 weniger Energie eingebracht werden muss.

Der Fertiggerüstgruppe 12 nachgeordnet ist eine Kühlstrecke 14 und eine weitere Schere 15, sowie die Aufwickelhaspel 16.

Vorteilhaft an der Anordnung des Ofens 6 vor der Vorgerüstgruppe 7 ist, dass je nach Länge des Tunnelofens 6 dieser als Puffer oder als Halteofen dienen kann.

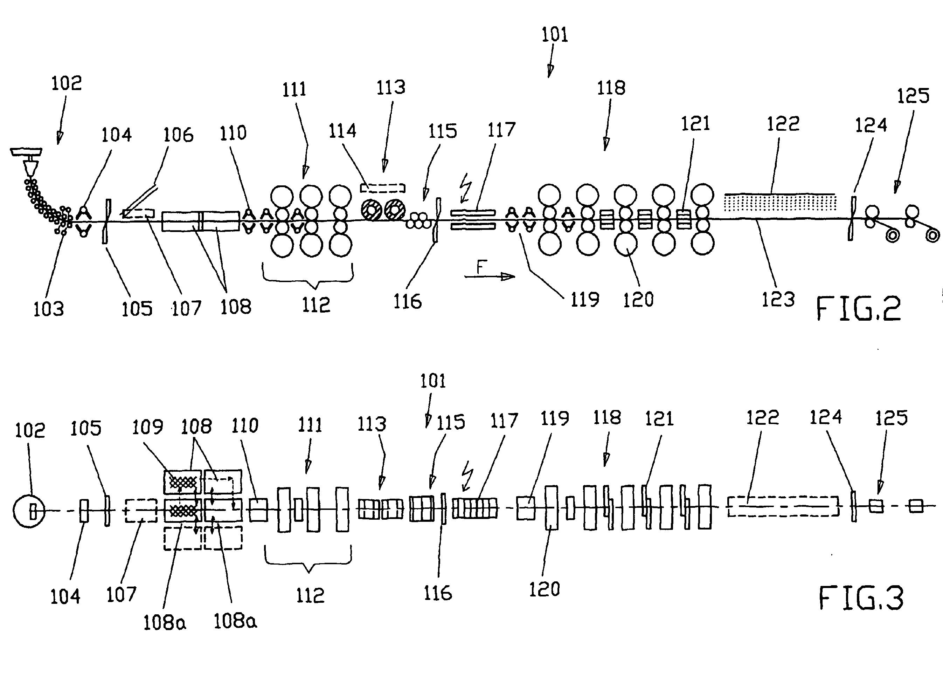

Die Figur 2 zeigt eine schematische Ansicht einer erfindungsgemäßen CSP-Anlage 101 in einer Seitenansicht, wobei die Figur 3 die CSP-Anlage 101 in einer Ansicht von oben zeigt.

Durch den Einsatz einer Anlage 101 nach den Figuren 2 oder 3 ist ein gekoppelter vollkontinuierlicher Gieß-Walz-Prozess, das so genannte Endloswalzen, oder wahlweise eine entkoppelte diskontinuierliche Bearbeitung von einzelnen Brammen im so genannten Batch-Betrieb möglich. Die Anlage 101 ist dabei sehr Platz sparend aufgebaut, so dass lediglich etwa eine halbe Anlagenlänge im Vergleich zu einer konventionellen CSP-Anlage benötigt wird. Die Anlage 101 erlaubt dennoch einen Arbeitswalzenwechsel in der Vorgerüstgruppe und/oder in der Fertiggerüstgruppe ohne dabei den Gießvorgang abbrechen zu müssen.

Die Anlage 101 weist vorzugsweise die folgenden Komponenten auf, wobei einzelne dieser Komponenten auch entfernt und/oder im Materialfluss anderweitig angeordnet werden können.

Eingangsseitig weist die Anlage 101 eine Gießanlage 102 auf, die vorzugsweise auch mit einer Strangkühlungsvorrichtung 103 ausgerüstet sein kann, die mit einer ggf. engen Kühlzonenteilung für eine Temperaturzonenregelung über der Breite versehen sein kann, um eine homogene Austrittstemperatur aus der Gieß- bzw. Stranggussanlage 102 einstellen zu können.

Der Gießanlage 102 nachgeordnet ist ein Zunderwäscher 104 und/oder eine Brammenreinigungsvorrichtung 104 vorgesehen, welche die austretende Bramme entsprechend reinigen kann. Dem nachgeordnet ist eine Brammenschere 105 vorgesehen. Die Brammenschere 105 kann benutzt werden zum Abtrennen des Kaltstrangs beim Anguss, zum Trennen der Brammen beispielsweise in Einzelbrammen, zum Trennen nach jeder n-ten Bramme mit z.B. n=2, 3 oder größer für den Semi-Endloswalzenbetrieb und/oder zum Häckseln der Bramme bei ggf. vorliegenden Störungen.

Im Materialfluss anschließend ist eine Kaltstrangentsorgungsvorrichtung 106 vorgesehen. Dabei kann beispielsweise über einen Galgen bzw. mittels einer Kette nach oben oder zur Seite über eine Verschiebeeinheit der Kaltstrang beim Anguss aus der Transportlinie der Anlage 101 genommen werden.

Weiterhin ist im Materialfluss eine Rollgangsabdeckung 107 vorgesehen, welche zur Reduzierung des Temperaturverlustes der Bramme heruntergeschwenkt werden kann. Sind die Abdeckungen 107 nach oben geschwenkt, so können in diesem Arbeitsbereich auch geschnittene Brammenplatten bei längeren Störungen heraus getragen werden.

Weiterhin sind beheizte Fähren und/oder Ofenteile 108 vorgesehen, die beispielsweise hintereinander angeordnet sein können. Die beheizten Fähren 108 und/oder Ofenteile können auch als zusätzliche Brammenspeicher für die Zeit bzw. den Betriebsmodus dienen, in welchem beispielsweise ein Walzenwechsel in der Vorgerüstgruppe 111 und/oder Fertiggerüstgruppe 118 vorgenommen wird, in dem Brammen oder geteilte Brammen 109 aus der Haupttransportlinie genommen werden können. Alternativ kann statt einer Fähre auch ein Ofen, wie beispielsweise ein Hubbalkenofen, neben der Haupttransportlinie eingesetzt werden. Beim Transport durch die Fähre und/oder durch den Ofen wird dabei vorzugsweise die Brammentemperatur im Wesentlichen gehalten oder nur geringfügig reduziert.

Bei niedrigen Gießgeschwindigkeiten kann hier auch eine Brammenerwärmung vorgesehen sein und durchgeführt werden, um flexibel nahezu gleich bleibende Eingangstemperaturen für den nachfolgenden Walzprozess einstellen zu können. Die beiden hintereinander angeordneten beiden Fähren 108 haben einzeln oder in Summe vorzugsweise die Länge einer Bramme 109 mit maximalem Ringgewicht zuzüglich einer Toleranz, damit etwas Spielraum zum Pendeln der Bramme vorgehalten werden kann. Damit ist der Fähren- bzw. Ofenbereich 108 relativ kurz in der Baulänge ausgeführt.

Diesen Elementen nachgeordnet sind gegebenenfalls erneut Zunderwäscher 110 vor der Vorgerüstgruppe 111, auch Vorstraße, Vorwalzstraße oder Vorgerüststraße genannt, vorgesehen. Die Vorgerüstgruppe 111 besteht vorzugsweise aus ein bis vier Vorgerüsten 112, bevorzugt aus 2 oder 3 Vorgerüsten. In der Vorgerüstgruppe 111 wird die Bramme von beispielsweise 70 bis 110 mm auf etwa 15 bis 50 mm heruntergewalzt. Im so genannten diskontinuierlichen Betrieb, wie auch Batch-Betrieb genannt, kann die Vorgerüstgruppenwalzgeschwindigkeit, also die Walzgeschwindigkeit in der Vorgerüstgruppe 111, unabhängig von der Gießgeschwindigkeit der Gießanlage 102 eingestellt werden. Die Wahl der Vorgerüstgruppenwalzgeschwindigkeit erfolgt vorteilhaft so, dass die maximale Ofentransportgeschwindigkeit von beispielsweise 1 m/s und die maximale Wickelgeschwindigkeit in dem Coil-Speicher von beispielsweise 3 m/s eingehalten werden kann

Um solche unterschiedlichen Geschwindigkeiten zu realisieren findet eine Geschwindigkeitsabstimmung zwischen der Vorgerüstgruppe 111 und dem so genannten Coil-Speicher 113, auch Coilbox genannt, statt. Der Coil-Speicher 113 stellt dabei eine Vorrichtung zum Aufwickeln bzw. Sammeln von Strangmaterial und zum ggf. zeitversetzten Abwickeln bzw. Ausleiten von Strangmaterial dar.

Zum Ausgleich von Massenflussdifferenzen zwischen der Vorgerüstgruppe 111 und dem Coil-Speicher 113 kann dort ein so genannter Looper oder ein durchhängender Bandbereich mit einer Bandschlingenregelung vorgesehen sein. Diese kann besonders für dünnere Vorbänder von Bedeutung sein.

Zur weiteren Ausgestaltung der Anlage kann hinter der Vorgerüstgruppe 111 und vor der Coilbox 113 ein Leveller und eine Induktionsheizung angeordnet (nicht dargestellt). Diese Einrichtung kann bevorzugt im Endlosmode aktiviert werden.

Wie in Figur 2 zu erkennen ist, kann im Bereich des Coil-Speichers 113 eine Rollgangsabdeckung 114 vorgesehen sein. Statt dem Coil-Speicher 113 kann eine Rollgangsabdeckung 114 für das Vorband vorgesehen sein, wodurch das Vorband thermisch isoliert wird, so dass der Energieaufwand reduziert wird, um das Vorband auf der gewünschten Temperatur zu halten. Dies ist besonders im Endlosmode, d. h. Walzen mit Gießgeschwindigkeit, vorteilhaft.

Die Rollgangsabdeckung 114 kann alternativ zum Coil-Speicher 113 vorgesehen werden oder kann ggf. auch den Coil-Speicher 113 selbst abdecken. Wird der Coil-Speicher 113 für den kontinuierlichen Betrieb der Anlange 101 nicht benötigt, so können die Auf- und Abwickelmechanismen des Coil-Speichers 113 deaktiviert oder heraus geschwenkt werden, so dass das Vorband den Bereich des Coil-Speichers 113 passieren kann. In diesen Falle würde ein Absenken der Rollgangsabdeckung 114 also eine verbesserte Isolierung des Rollgangs für das Vorband bewirken.

Der Coil-Speicher 113 ist zweckmäßiger Weise für die Aufnahme von normalen Einzelcoils und/oder von sogenannten Jumbo-Coils ausgelegt. Einzelcoils sind dabei Coils, also Aufwicklungen von einzelnen Vorbändem bzw. einzelnen Brammen. So genannte Jumbo-Coils sind Aufwicklungen von mehreren Vorbändem oder von mehreren Brammen. Daher sind die Jumbo-Coils typischer Weise Aufwicklungen von zwei oder drei oder mehr Vorbändem oder Brammen. Für den Fall, dass der Coil-Speicher 113 eine Aufnahmekapazität von Jumbo-Coils aufweist, können entsprechend mehrere Vorbänder oder Brammen aufgewickelt und gespeichert und wieder abgewickelt und dem weiteren Prozess zugeführt werden.

Durch das Aufwickeln der Vorbänder bzw. Brammen wird insbesondere in der Länge Platz gespart, was somit die Anlagenlänge reduziert bei gleichzeitig sehr großem Speicher.

Im kontinuierlichen Betrieb der Anlage bzw. im Endlosmodus oder bei Nichtbenutzung des Coil-Speichers 113 wird, wie oben ausgeführt, der Längenbereich des Coil-Speichers mit einer Rollgangsabdeckung 114 abgedeckt um Vorbandtemperaturverluste zu reduzieren. Statt des Coil-Speichers 113 mit passiver Wärmedämmung seitlich und von oben können alternativ auch direkt hinter den Vorgerüsten ein beheizter Coil-Speicher oder alternativ ein oder zwei Wickelöfen angeordnet sein.

Nach dem Coil-Speicher 113 ist eine Anordnung von Richtrollen 115 vorgesehen. Diese sollen eine gerade wellenfreie Vorbandform erzeugen, um ggf. das Vorband sicher durch die folgende Induktionsheizung transportieren zu können.

Die nach den Richtrollen 115 vorgesehene Schere 116 dient dem Konditionieren der Bandendenform am Kopf und/oder am Ende nach dem Coil-Speicher 113 und/oder vor der Induktionsheizung 117 oder beseitigt ungerade Vorbandendenformen, wie beispielsweise Ski.

Mit der nachfolgenden Induktionsheizung 117 kann das Vorband individuell auf die gewünschte Fertiggerüstgruppeneinlauftemperatur gebracht werden. Damit können höhere Temperaturen, wie beispielsweise 1350°C bei der Walzung von komorientiertem Silizium-Stahl (GO-Si-Stahl) oder bei anderen Materialien eingestellt werden. Auch können höhere Temperaturen bei der Dünnbandwalzung mit einer Dicke von H<1.5 mm eingestellt werden. Auch kann die Temperatur erhöht werden, wenn die Vorbandtemperatur zu niedrig ist. Auch können niedrige Temperaturen erzeugt werden, ohne bzw. mit nur geringem Energieeintrag, damit bei normalen Bändern Energie gespart werden kann.

Weiterhin können damit homogene Temperaturen über der Vorbandlänge erzeugt werden, um damit eventuelle Temperaturungleichmäßigkeiten an Kopf und Ende, die ggf. in dem Coil-Speicher 113 entstanden sind, durch unterschiedliche Energieeinbringung über der Vorbandlänge auszugleichen.

In dem Falle, dass die Anlage 101 in einem Endlosmodus mit einer relativ niedrigen Gießgeschwindigkeit und damit niedrigen Walzgeschwindigkeit in Vor- und Fertiggerüstgruppe 111,118 betrieben wird, dient die Induktionsheizung 117 zur Einstellung einer gewünschten Walztemperatur.

Unterstützt werden kann diese Induktionsheizung 117 vor der Fertiggerüstgruppe optional auch durch weitere Induktionsheizungen innerhalb der Fertiggerüstgruppe 118 selbst. Die Induktionsheizung 117 vor der Fertiggerüstgruppe 118 ist vorteilhaft quer verschiebbar oder hochschwenkbar ausgeführt, so dass die Induktionsheizung durch eine passiv isolierende oder gar beheizte Rollgangsabdeckung bei Bedarf ersetzt werden kann.

Im Materialfluss nach der Heizung 117 sind erneut Reinigungsvorrichtungen 119, wie beispielsweise Zunderwäscher vorgesehen, die vor der Fertiggerüstgruppe 118 angeordnet sind.

In der nachfolgenden Fertiggerüstgruppe 118, auch Fertigstraße genannt, sind vorteilhaft 3 bis 7 Fertiggerüste 120, beispielsweise 5 Fertiggerüste 120, vorgesehen. In der Fertiggerüstgruppe 118 wird das Vorband auf eine Enddicke von ca. 0.8 - 16 mm heruntergewalzt.

Zwischen den Gerüsten 120 der Fertiggerüstgruppe 118 können weiterhin Heizungen 121 vorgesehen sein, um das Bandmaterial aufzuheizen.

Nach der Fertiggerüstgruppe 118 ist eine Kühlstrecke 122 vorgesehen, um das gewalzte Band 123 abzukühlen, bevor es mit der Bandschere 124, wie beispielsweise Dünnbandschere geschnitten werden kann und anschließend auf Haspeln einer Haspelanlage 125 aufgewickelt wird. Die Dünnbandschere wird dabei zum Schneiden der Bänder 123 kurz vor dem Haspel eingesetzt, wenn die Anlage 101 im Endlos- oder Semi-Endlos-Mode betrieben wird.

Für die Anlage 101 der Figuren 2 und 3 gibt es nun verschiedene Betriebsmodi, in welcher die Anlage 101 betrieben werden kann.

Der so genannte Batch-Betrieb, auch diskontinuierlicher Betrieb der Anlage genannt, weist einen diskontinuierlichen Betrieb in Vor- und Fertiggerüstgruppe 111,118 auf. Bei Beginn eines Gießprozesses, bei der Inbetriebnahme einer Anlage 101, bei allgemeinen Gießproblemen oder bei schwierig zu gießenden Stählen wird die Gießgeschwindigkeit relativ niedrig eingestellt. Bei niedrigen Gießgeschwindigkeiten ist ein Endlos-Walzen mit diesem niedrigen Massenfluss von der Gießanlage 102 bis zur Fertigstraße 118 aus Temperaturgründen nicht sinnvoll oder unwirtschaftlich. Zur Reduktion der Energieverluste wird daher der Batch-Betrieb bevorzugt eingesetzt. Beim Batch-Betrieb sind der Gießprozess, die Walzung in der Vorstraße 111 und die Fertigwalzung in der Fertigstraße 118 zum Teil zumindest entkoppelt und finden somit mit unterschiedlicher Geschwindigkeit bzw. mit unterschiedlichem Massenfluss statt.

Nach dem Anguss wird zunächst der Kaltstrang entsorgt und im Brammenkopfbereich die Dünnbramme geschopft. Nach Erreichen des gewünschten Coilgewichtes erfolgt für jede Bramme das wiederholende Schopfen an der Schere 105 hinter der Stranggussanlage 102. In der Vorstraße 111 geschieht anschlie-βend die Walzung auf die Vorbanddicke und danach das Wickeln des Vorbandes in einem Coil-Speicher 113. Es folgt nach dem Abwickeln und dem Nachheizen des Vorbandes die Walzung in der Fertigstraße 118 mit einer ebenfalls individuell einstellbaren Walzgeschwindigkeit und der Weitertransport durch Kühlstrecke 122 und letztlich das Aufwickeln in der Haspelanlage 125.

Der so genannte Endlos-Betrieb ist ein weiterer Betriebsmodus, in welchem die Gießmaschine 102 sowie die Vorgerüstgruppe 111 und die Fertiggerüstgruppe 118 gekoppelt sind. Mit zunehmender Gießgeschwindigkeit und abhängig von den zu walzenden Enddicken des Bandes wird in den Endlosbetrieb umgeschaltet. Ein vorteilhafter Bereich für das Endloswalzen liegt beispielsweise bei einer Gießdicke von 80mm und einer Gießgeschwindigkeit von 7m/min oder allgemein ausgedrückt der Endlosbetrieb ist vorteilhaft bei einem Massenfluss in der Größenordnung von Gießdicke * Gießgeschwindigkeit ≥ 550 mm * m/min. Bei diesem Endlosbetriebsmodus wird die Schere 124 vor dem Haspel 125 zum Trennen der Bänder verwendet. Durch die Bereiche in denen sonst die Vorbänder in dem Coil-Speicher 113 aufgewickelt werden würden, wird das Vorband gerade durch bewegt. Um den Temperaturverlust des Vorbandes zu minimieren, werden in diesem Bereich Rollgangsabdeckungen 114 hineingeschwenkt. Auch der Richtrollensatz 115 kann ggf. vorteilhaft quer verschiebbar ausgeführt werden oder er kann vorteilhaft weiträumig aufgefahren werden, um auch hier eine Wärmedämmung zwischen den Rollgangsrollen und/oder über dem Rollgang unterbringen zu können. Bevor das Vorband in die Fertiggerüstgruppe 118 einläuft, wird es induktiv so erwärmt, so dass sich eine ausreichend hohe Walztemperatur einstellt und dass die Walzung im austenitischen Bereich stattfindet. Beim anschließenden Endlos-Fertigwalzen werden ggf. optional auch die induktiven Heizungen 121 innerhalb der Fertiggerüstgruppe 118 eingesetzt, welche die induktive Heizung 117 vor der Fertiggerüstgruppe 118 unterstützen. Beim diskontinuierlichen Betrieb oder Anfahrvorgang am Bandkopf stehen die Wärmedämmungen dagegen in einer Warteposition entfernt über oder neben dem Band.

Weiterhin kann ein so genannter Semi-Endlos-Betrieb in der Fertiggerüstgruppe 118 realisiert werden. Der bereits oben erwähnte Coil-Speicher 113 mit erhöhter Kapazität, auch Jumbo-Coilbox genannt, bietet die Möglichkeit zwei oder mehrere Vorbänder zu speichern. Soll beispielsweise ein Walzenwechsel nur in der Fertiggerüstgruppe 118 durchgeführt werden oder liegt in der Fertiggerüstgruppe 118 eine längere Störung vor, so kann zusätzlich zur Speicherung in dem Ofen vor der Vorgerüstgruppe 111 die Jumbo-Coilbox 113 als Speicher dienen. Dies bedeutet, dass die Gießanlage 102 und die Vorstraße 111 weiterhin in einem Semi-Endlosmode arbeiten, in dem sie gekoppelt sind und es findet eine Walzung in der Vorgerüstgruppe 111 und ein anschließendes Aufwickeln in der Jumbo-Coilbox 113 mit Gießgeschwindigkeit statt.

Ist die Fertiggerüstgruppe 118 wieder betriebsbereit, so erfolgt die Semi-Endloswalzung in der Fertiggerüstgruppe 118 der zwei oder mehr Bänder, die im Jumbo-Coil-Speicher 113 zwischenzeitlich gespeichert wurden. Die Trennung der Bänder wird an der Schere 124 vor dem Haspel 125 vollzogen. Im Semi-Endlos-Modus kann die Walzung in der Fertiggerüstgruppe 118 in vorteilhafter Weise mit erhöhter Geschwindigkeit und mit minimierter induktiver Energiezufuhr und/oder mit einem Einsatz einer Zwischengerüstkühlung betrieben werden.

Eine gekoppelte Fahrweise von Gießanlage 102 und Vorstraße 111 werden vorteilhaft bei höherem Massenfluss ausgedrückt in Gießdicke * Gießgeschwindigkeit ≥ 350 mm * m/min eingestellt. Ein Rechenmodell mit einer Steuereinheit überwacht vorteilhaft, dass die Walzung in der Vorgerüstgruppe 111 und das anschließende Auf- und Abwickeln in dem Coil-Speicher 113 für Mitte und/oder Rand nicht unterhalb einer Grenztemperatur, wie etwa einer Umwandlungstemperatur eines Stahls - also im austenitischen Bereich, stattfinden. Sollte der Ofen 108 vor der Vorgerüstgruppe 111 länger ausgebildet sein, beispielsweise zur Speicherung von zwei Brammen oder mehreren Brammen hintereinander, so ist ein Walzen in der Vorgerüstgruppe 111 mit höherer Geschwindigkeit unabhängig von der Gießmaschine 102 möglich und energetisch sinnvoll und auch ist in dieser Konstellation anschließend eine Semi-Endlos-Walzung in der Fertiggerüstgruppe 118 möglich.

Erfindungsgemäß kann ein Walzenwechsel in der Vorgerüstgruppe 111 und/oder in der Fertiggerüstgruppe 118 bei aktivem Gießvorgang durchgeführt werden.

Beim Wechseln der Arbeitswalzen oder bei Störungen in einer von den Walzstraßen sollte vorzugsweise der Gießprozess nicht unterbrochen oder allzu stark gestört werden. Deshalb ist es vorteilhaft einen Puffer für die Brammen einzubauen. Hierzu ist ein kurzer Rollenherdofen 108 hinter der Gießanlage 102 bei einer erfindungsgemäßen CSP-Anlage vorgesehen, in dem verfahrensbedingt vier halbe Brammen Platz finden. Der Ofen 108 ist in seiner Ausgestaltung in Form einer besonderen Art von Fähren ausgebildet, wie es in Figur 3 dargestellt ist. Hier sind in Transportrichtung zwei Fährengruppen 108a hintereinander angeordnet von denen beide unabhängig voneinander quer verfahren werden können. Alternativ ist auch die vordere Fährengruppe 108a hinter der Gießanlage 102 als Ofenteil fest eingebaut. In diesen beiden Fährengruppen finden in Summe die vier halben Dünnbrammen Platz. Die mit der unterbrochenen Linie gezeichneten Felder sind Ausweichparkpositionen für die Fähren 108a. Es ist auch ein Transport von Brammen von Fähre 108a zu Fähre 108a neben der Walzlinie möglich, so dass individuell von der einen oder anderen Fähre ein Rücktransport von Brammen in die Walzlinie durchgeführt werden kann. Diese Anordnung erleichtert den flexiblen Rücktransport von Brammen nach einer Walzunterbrechung beispielsweise bei einem Walzenwechsel oder bei einer Störung.

Als weitere alternative Ausgestaltung sind als zweite Fährengruppe 108a auch mehr als 2 Fährenteile oder Hubbalkenofenteile nebeneinander denkbar, um die Speicherkapazität bei gleicher Gesamtanlagenlänge zu erhöhen. Sind die Fähren 108a, wie Öfen, voll, weil beispielsweise die Walzunterbrechung länger dauert, so können folgende Betriebsweisen vorgesehen werden.

Bei einer Walzunterbrechung in der Vorgerüstgruppe 111 kann ein Schneiden und Austragen von Brammen vor dem Ofen 108 im Bereich der Kaltstrangaustragevorrichtung 106 vorgenommen werden.

Walzunterbrechungen in der Fertiggerüstgruppe 111 sind in der Regel öfter notwendig. In diesem Fall werden in dieser Zeit die Vorbänder auf gewünschte Vorbanddicken ausgewalzt und in dem Coil-Speicher 113 gewickelt. Diese Coils werden dann aus der Walzlinie heraus getragen und direkt verkauft bzw. in einem Coilofen neben der Walzlinie zwischengespeichert und später wieder in das Verfahren eingesetzt. In der Zeit des Walzenwechsels im Fertiggerüst 120 wird optional die Gießgeschwindigkeit reduziert, um die Pufferzeit zu erhöhen.

Bei dem Walzen des Bandes ist eine Einstellung von gezielten Vorbandtemperaturen durch Kühlung bzw. durch Heizung hilfreich.

Durch Wahl der Walzgeschwindigkeit in der Vorgerüstgruppe 111 und Kühlung innerhalb oder hinter der Vorgerüstgruppe 111 lassen sich die Vorbandtemperaturen in einem weiten Bereich beeinflussen. Dies kann für bestimmte Materialien bzw. Röhrengüten interessant sein. Alternativ oder zusätzlich kann auch eine Kühleinrichtung vor der Fertiggerüstgruppe 118 vorgesehen sein. Eine andere Kühlmöglichkeit besteht auch durch Herausschwenken oder Herausfahren der Induktionsheizung 117 und dem dortigen Hineinschwenken eines Vorbandkühlers. Die Heizung erfolgt durch den Einsatz einer beispielsweise induktiven Heizung vor der Fertiggerüstgruppe 118.

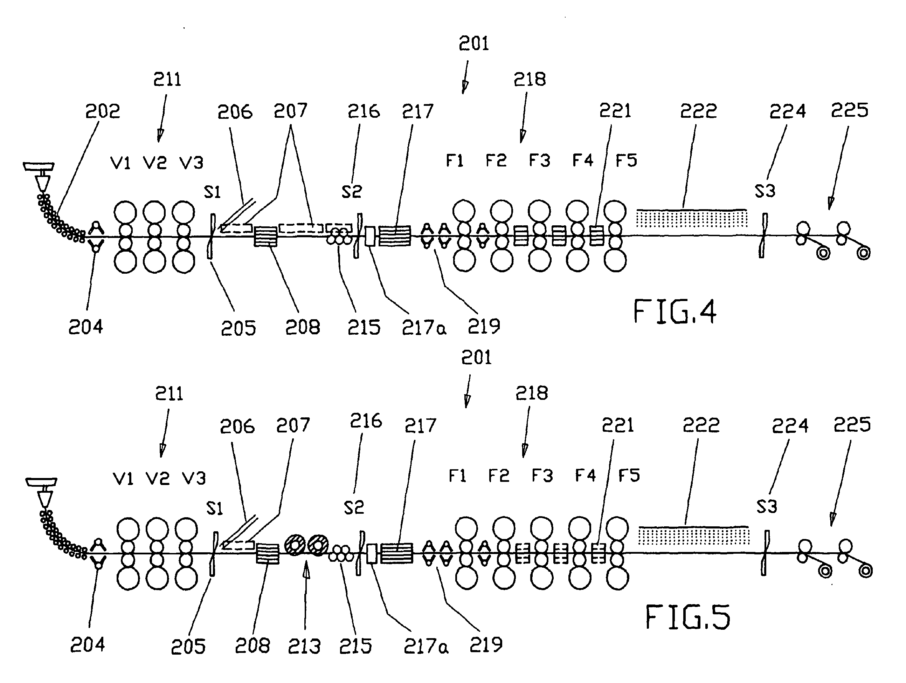

Die Figuren 4 bis 9 zeigen CSP-Anlagen 201, 301 und 401 für den Einsatz in einem gekoppelten vollkontinuierlichen Gieß-Walz-Prozess, dem so genannten Endloswalzen, und wahlweise in einem entkoppelten diskontinuierlichen Einsatz von einzelnen Vorbändem im Batchbetrieb. Weiterhin ist auch ein Semi-Endlos-Betrieb in der Fertigstraße praktizierbar. Dabei zeigen die Figuren 4,6 und 8 die Anlage für den kontinuierlichen Betrieb und die Figuren 5, 7 und 9 die jeweilige Anlage für den Batchbetrieb bzw. für den Semi-Endlos-Betrieb.

Die Anlagen 201, 301 bzw. 401 sind Platz sparend aufgebaut, wobei vorteilhafte Ausgestaltungen durchaus die halbe Anlagenlänge im Vergleich zu einer konventionellen CSP-Anlage erreichen. Der Aufbau der Anlagen erlaubt trotzdem einen Arbeitswalzenwechsel in der Fertiggerüstgruppe ohne den Gießvorgang abzubrechen.

Die Anlage 201 weist eine 3-gerüstige Vorgerüstgruppe 211 und einer 5-gerüstige Fertiggerüstgruppe 218 auf. Nach der Gießanlage 202 ist ein Zunderwäscher 204 vorgesehen, anschließend die Vorgerüstgruppe 211 und danach eine Schere 205. Nach der Schere 205 kann aus dem Strang ausgegrenzt und entnommen werden. Dazu ist die Entnahmevorrichtung 206 vorgesehen. Zur besseren thermischen Isolation kann der Bereich der Entnahmevorrichtung 206 im Falle der nicht aktiven Entnahme mit einer Rollgangsabdeckung 207 versehen werden. Danach ist ein Ofen 208, bevorzugt ein Induktionsofen vorgesehen, welcher das Bandmaterial vor dem Coil-Speicher 213 aufheizen oder temperieren kann. Wird der Coil-Speicher 213 nicht benötigt, wie im kontinuierlichen Betrieb, so kann eine Rollgangsabdeckung 207 eingesetzt sein. Nach dem Coil-Speicher 213 ist eine Richtrollenvorrichtung 215 vorgesehen, die für den kontinuierlichen Betrieb jedoch auch entfernt werden kann. Anschließend ist im Materialfluss eine Schere 216 vorgesehen. Nach der Bandschere 216 ist optional eine Kantenheizung 217a und ein Induktionsofen 217 angeordnet, um das Band vor der Fertiggerüstgruppe 218 aufheizen zu können. Weiterhin sind Zunderwäscher 219 vorgesehen. Die Fertiggerüstgruppe 218 weist vorteilhaft fünf Fertiggerüste F1 bis F5 auf. Nach der Fertiggerüstgruppe 218 sind eine Kühlstrecke 222, eine Schere 224 und die Haspelanordnung 225 vorgesehen.

Im Endlosbetrieb ist somit statt dem Coil-Speicher 213 eine Rollgangabdeckung vorgesehen. Im diskontinuierlichen Betrieb wird der Coil-Speicher betrieben und mit Band gefüllt, das anschließend wieder dem Verarbeitungsprozess zugeführt wird.

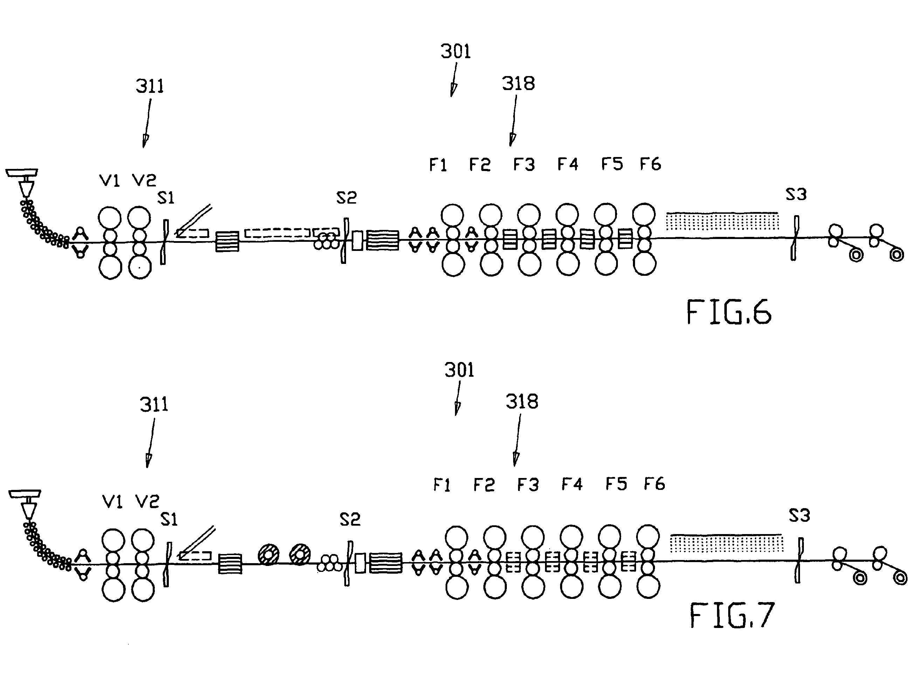

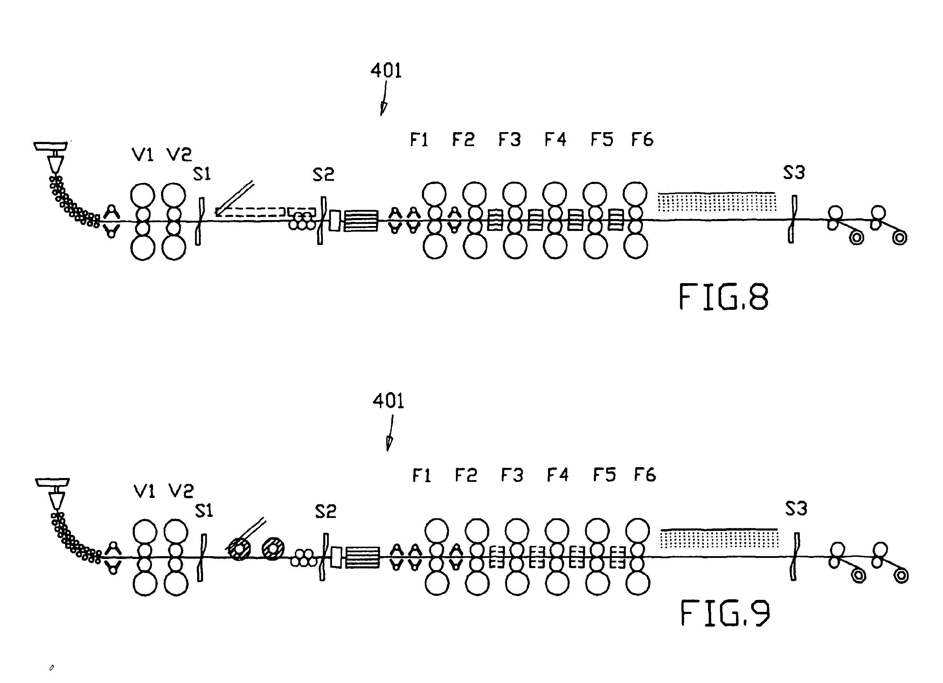

Alternativ sind auch eine 2-gerüstige Vorgerüstgruppe und eine 6-gerüstige Fertiggerüstgruppe vorgesehen, siehe Figuren 6 bis 9. Die Figuren 6 und 7 zeigen die Vorgerüstgruppe 311 mit zwei Gerüsten und die Fertiggerüstgruppe 318 mit sechs Gerüsten. Ansonsten unterscheidet sich die Anlage gemäß der Figuren 6 und 7 nicht wesentlich von der Anlage der Figuren 4 und 5. Die Anlage 401 der Figuren 8 und 9 weist gegenüber den Anlagen 201 und 301 der Figuren 4 bis 7 keine Heizung zwischen den Scheren S1 und S2 auf. Dadurch baut die Anlage der Figuren 8 und 9 deutlich kürzer als die beiden anderen Anlagen.

Nach dem Gießen beispielsweise in einer Dünnrammengießanlage mit Gießdicken im Bereich von etwa 60 - 100 mm wird die Dünnbramme im kontinuierlichen Prozess auf eine Vorbanddicke von ca. 15 - 60 mm auf einer 1-3-gerüstigen Vorgerüstgruppe heruntergewalzt. Anschließend erfolgt eine induktive Aufheizung des Vorbandes und die Fertigwalzung in der 3-7-gerüstigen Fertiggerüstgruppe auf eine Enddicke von ca. 0.8 - 16 mm. Hinter der Fertiggerüstgruppe wird das Band gekühlt und aufgewickelt. Es sind wiederum die drei verschiedenen Betriebszustände vorgesehen, die auch oben beschrieben worden sind.

Besonders vorteilhaft für die erfindungsgemäße Ausgestaltung ist es, wenn eine Vergrößerung der Wickelkapazität der Vorbänder in dem Coil-Speicher vorgesehen ist. Der Coil-Speicher wird nicht nur zum Wickeln eines Vorbandes verwendet, sondern in dem Fall eines Walzenwechsels erfolgt die Erzeugung von so genannten Jumbo-Coils, bei welchen zwei oder mehr (n) Vorbänder zu einem Vorbandcoil gewickelt werden. Hierdurch wird ein ausreichender Puffer für einen Walzenwechsel geschaffen. Gleichzeitig ist der Bauraum im Vergleich zu dem konventionellen Halteofen wesentlich geringer. Die Speicherung der Vorbänder ist sehr kompakt, was sich auch in einem niedrigen Temperaturverlust auswirkt. Die Krankapazität wird auf n*Coilgewicht ausgelegt.

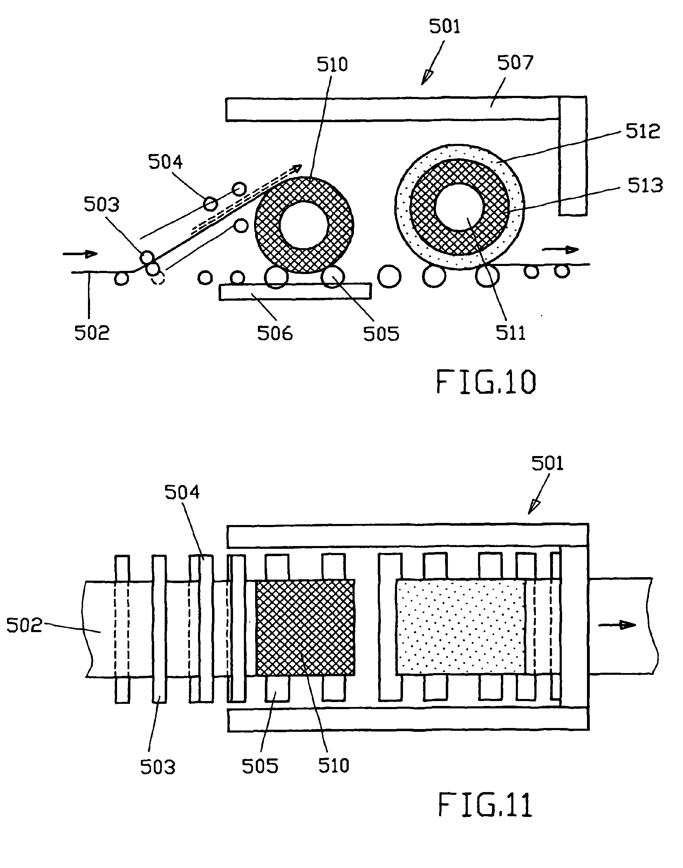

In den Figuren 10 und 11 sind in Ansichten des so genannten Jumbo-Coil-Speichers Details dargestellt. In diesem Beispiel wird ein vergrößertes kapazitiv erweitertes so genanntes Jumbo-Vorbandcoil erzeugt. Dieses besteht vorteilhaft aus zwei oder mehr Vorbändem, wobei in den Figuren ein Ausführungsbeispiel mit zwei Vorbändem gezeigt ist.

Wird beispielsweise im Endlosmode gewalzt, so erfolgt die Trennung des letzten Vorbandes vor dem Walzenwechsel durch Schere S1. Der Rest des Bandes wird fertig gewalzt und der Arbeitswalzenwechsel wird danach gestartet. Während des Walzenwechsels erfolgt wie bereits beschrieben die Speicherung der Vorbänder in dem Jumbo-Coil-Speicher. Nach dem Anwickeln und Transport des Coils während des Wickelvorgangs von der Auf- zur Abwickelstation finden z.B. 2 Vorbänder dort Platz. Während z.B. das dritte Vorband fast aufgewickelt ist, sollte der Arbeitswalzenwechsel abgeschlossen sein. Es wird hierbei erwartet, dass nach einem Arbeitswalzenwechsel die Fertiggerüstgruppe-Einzugsgeschwindigkeit für die Anfahrbänder höher ist, wie beispielsweise doppelt so hoch ist, wie die umgerechnete Gießgeschwindigkeit bzw. Einlaufgeschwindigkeit in den Coil-Speicher. So kann sich kontinuierlich der Coil-Speicher wieder abbauen.

Ein Coil-Speicher, welcher in seinem Speicher beispielsweise Coils mit drei oder mehr Vorbändem aufnehmen kann, würde noch mehr Sicherheiten bei einem Walzenwechsel bewirken, weil es längere Pausen ermöglichen würde.

Die Figuren 10 und 11 zeigen einen solchen Coil-Speicher 501 in einer Seitenansicht bzw. in einer Ansicht von oben. Die Figur 10 zeigt von links kommend ein Vorband 502, welches mittels Treibern 503 und einer Biegeeinheit 504 zu einem Coil gewickelt wird. Bodenseitig liegt das Coil auf einem Rollensatz 505, der gegenüber den herkömmlichen Bodenrollen verstärkt ist und mittels einer Verschiebeeinheit 506 seitlich verschiebbar ist. Durch lange Wickelzeiten und/oder ein hohes Coilgewicht sind hitzebeständige bzw. innengekühlte größere Bodenrollendurchmesser nötig, um der Belastung stand zu halten. Zur Unterstützung der Bodenrollen 505 können alternativ auch zusätzliche Stützrollen unter die Bodenrollen geschwenkt werden.

Während des Auf- und Abwickelvorgang wird der Coil-Speicher 501 bzw. das Coil 510 seitlich und von der Oberseite thermisch gedämmt. Hierzu werden Hauben 507 in die entsprechende Position geschwenkt. Eine Dämmung zwischen zumindest einzelnen oder zwischen allen möglichen Rollgangsrollen kann auch vorgesehen werden.

Zusätzlich ist vorgesehen die Dämmwände mit Brennern zu versehen und das Coil 510 oder das Coilauge 511 so aktiv zu beheizen, um einen Temperaturverlust zu reduzieren. Durch das Aufwickeln wird die Verzunderung im Coil reduziert. Wird die Brenner-Heizung mit Sauerstoffunterschuss gefahren, so vermindert sich die Zunderbildung zusätzlich. Eine Absaugung der Abgase kann optional auch vorgesehen sein. Während der Haltezeit kann das Coil langsam gedreht werden bzw. gependelt werden, um Temperaturstreifen am Coil 510 und an den Bodenrollen 505 zu vermeiden.

Wie in Figur 10 zu erkennen ist, sind auf dem rechten Coil zwei Vorbänder 512, 513 aufgewickelt, welche in der Abwickelposition wieder abgewickelt werden. Dazu sind nicht dargestellte Abwickelvorrichtungen vorgesehen.

Um eine weitgehend gleichmäßige Fertiggerüstgruppen-Einlauftemperatur zu erzeugen, können die Induktionsheizungen am Kopf und Ende eines Coils auf höhere Leistung gestellt oder/und die Vorbandkopfgeschwindigkeit beim Abwickeln und anschließenden Durchlaufen der Induktionsheizung reduziert werden. Bei ungünstigen Bedingungen kann in Ausnahmefällen die äußere und innere Coilwindung weg geschopft werden. Optional ist ein Treiber vor der Aufwickeleinheit vorgesehen. Auch die 3-Rollen-Biegeeinheit kann alternativ als Treiber oder Treiber ähnlich ausgeführt sein, um bei niedriger Wickelgeschwindigkeit ein sicheres Aufwickeln zu gewährleisten.

Der Jumbo-Coil-Speicher 501 bietet die Möglichkeit nach einem Walzenwechsel oder generell als Betriebsmode zwei oder mehrere Vorbänder nicht hinter der Vorgerüstgruppe oder hinter dem Coil-Speicher 501 an Schere S2 zu trennen, sondern die Trennung der Bänder vor dem Haspel an Schere S3 zu vollziehen. Zur Reduktion der Energieverluste wird der Batch-Betrieb und vor allem der Semi-Endlos-Betrieb bevorzugt eingesetzt. Vorteilhaft werden zumindest dünne kritisch zu walzende Bänder im Endlos-Modus betrieben. Im Semi-Endlos-Mode kann die Walzung in vorteilhafter Weise mit erhöhter Geschwindigkeit und mit minimierter induktiver Energiezufuhr und/oder Einsatz der Zwischengerüstkühlung betrieben werden.

Mit der induktiven Heizung wird beim Endlosbetrieb oder beim diskontinuierlichen Batch-Betrieb die Dünnbramme nachgeheizt. Dabei kann der Wärmeeintrag abhängig von der Gießgeschwindigkeit und den Temperaturverlusten beispielsweise auch innerhalb des Coil-Speichers individuell eingestellt werden, so dass sich beim Verlassen der Dünnbramme aus der induktiven Heizung eine konstante Temperatur auf dem gewünschten Niveau ergibt. Beim Endloswalzen bestimmt das Niveau der Gießgeschwindigkeit den Temperaturverlauf durch die gesamte Anlage. Abhängig von der Gießgeschwindigkeit steuert ein Rechenmodell dynamisch die Heizleistungen der induktiven Heizungen vor und innerhalb der Walzstraße in der Art, dass die Auflauftemperatur die Zieltemperatur erreicht. Unterschreitet die Gießgeschwindigkeit einen bestimmten vorgegebenen Schwellwert, beispielsweise bei Problemen in der Gießanlage, bei schwierig zu gießenden Materialien, beim Anfahrvorgang etc., so wird automatisch vom Endlosmode zum diskontinuierlichen Walzen (Batchbetrieb oder Semi-Endlosbetrieb) in der Fertiggerüstgruppe umgeschaltet.

Dies bedeutet, dass die Dünnbramme mit der Schere S1 getrennt und die Walzgeschwindigkeit der Fertiggerüstgruppestraße so erhöht wird, dass die gewünschte Endwalztemperatur erreicht wird. Dabei werden die Brammen- bzw. Bandsegmente innerhalb der Straße verfolgt und dynamisch abhängig von der Temperaturverteilung die Transport- bzw. Walzgeschwindigkeit und induktiven Heizleistungen über der Bandlänge angepasst. Hat sich der Gießprozess wieder stabilisiert und die Gießgeschwindigkeit übersteigt den vorgegebenen Mindestwert, dann wird analog vom diskontinuierlichen Betrieb wieder zurück in den Endlosbetriebsmodus geschaltet.

Durch ein freies beispielsweise ereignisabhängiges Umschalten bzw. Einstellen von Endlos- oder diskontinuierlichen Betrieb und das Vorhandensein eines Puffers ist ein hohes Maß an Flexibilität gegeben, die eine Erhöhung der Prozesssicherheit darstellt. Dies gilt insbesondere bei einer Inbetriebnahme einer Produktionsanlage.

Je nach Randbedingungen kann die Schere S2 auch vor oder/und hinter dem Coil-Speicher angeordnet sein.

Statt einer Jumbo-Coilbox kann auch ein beheizter Wickelofen so ausgeführt werden, dass zwei oder mehrere Vorbänder in einem Ofen Platz finden. Der Wickelofen ist hierzu entsprechend größer zu dimensionieren. Hierzu sind zwei Wickelöfen über oder nebeneinander vorgesehen. Der Bandspeicher durch Aufwickeln von mehreren Vorbändem zwischen Vor- und Fertiggerüstgruppe ist also nicht auf die gezeigte Coil-Speicherform beschränkt, sondern kann erfindungsgemäß auch konstruktiv unterschiedlich ausgeführt sein.

Das Wickeln des Vorbandes zum Coil kann im Uhrzeigersinn oder auch gegen den Uhrzeigersinn durchgeführt werden, um beispielsweise die Wickelbedingungen bei der niedrigen Einlaufgeschwindigkeit zu verbessern.

Statt in einem Jumbo-Vorbandcoil mehrere Vorbänder zu speichern, kann der Coil-Speicher aus einzelnen gewickelten Vorbändem bestehen. Hier werden die einzelnen Coils seitlich quer in einen Halteofen verfahren. Auch hiermit lässt sich zumindest der Batchbetrieb und der Endlosbetrieb alternativ realisieren und es ist genügend Speicherzeit vorsehbar in der ein Fertigstraßen-Arbeitswalzenzwischenwechsel ohne Gießabbruch durchgeführt werden kann.

Bei einer anderen alternativen Ausführungsform kommen nach der Collaufwickelstation in Transportlinie zwei oder mehrere Abwickelstationen zum Einsatz. Dadurch sind mehrere hintereinander angeordnete Coilplätze als Vorbandspeicher vorgesehen. Entsprechend können einzelne oder auch Jumbo-Vorbänder aufgenommen werden. Auch eine Aufnahme von Vorbändem in einem Karussellhaspel ist alternativ möglich.

Gemäß einer weiteren Ausgestaltung der erfindungsgemäßen Anlage ist in Figuren 8 und 9 die Anlage derart ausgestaltet, dass ein Temperaturverlust an die Umgebung weiter zu mindern ist und die Anlage noch kürzer gebaut werden kann. Dabei ist der Coil-Speicher oder Jumbo-Coil-Speicher alternativ direkt hinter der Vorgerüstgruppe V1,V2 angeordnet, die ein- bis dreigerüstig sein kann. Der Kaltstrang am Strangkopf wird hierbei beispielsweise über die Coil-Speicher-Aufwickelbahn in diesem Bereich nach oben entsorgt. Die Aufheizung des Vorbandes auf die gewünschte Vorbandtemperatur erfolgt hier nur hinter dem Coil-Speicher, also direkt vor der Fertigstraße. Statt einem Coil-Speicher kann auch direkt hinter den Vorgerüsten alternativ ein oder zwei oder mehr Wickelöfen angeordnet sein. Im Bereich der Coilwickelstation 501 ist ein Plattenquertransport beispielsweise mittels einer Plattenhebeeinheit 506 bestehend aus hebbaren und/oder querverschiebbaren Streben vorgesehen. Hier werden Platten mit verschiedenen Vorbanddicken, während des Angießvorgangs, wenn der Speicher der Abwickelstation voll ist oder wenn sonst schnell Platz geschaffen werden soll, zur Seite transportiert. Geschnitten werden die Platten unterschiedlicher Produktionsdicke mit der Schere S1.

Das Überheben der Coils von der Auf- zur Abwickelstation während des Aufwickeivorgangs erfolgt beispielsweise mittels eines angetriebenen Doms, der hierfür kurzzeitig in das Coilauge hinein gefahren werden kann. Alternativ erfolgt der Coiltransport von der Auf- zur Abwickelstation durch entsprechende Bewegungen der Bodenrollen nach dem Schneiden des Vorbandes mit der Schere S1. Um hierfür eine Lücke zwischen aufeinander folgenden Vorbändem zu ziehen, wird hierzu das Coil bzw. das Vorband nach dem Trennen beschleunigt und das Rest-Vorband schneller gewickelt.

Optional ist eine Entzunderung bzw. eine Vorbandreinigung vor dem Coil-Speicher, d.h. vor dem Aufwickeln vorgesehen. Um den Temperaturverlust klein zu halten, werden minimale Wassermengen und ein hoher Druck eingesetzt, wie beispielsweise bei Zunderwäschem mit rotierenden Entzunderungsdüsen.

Zum Ausgleich von Massenflussänderungen ist eine Einrichtung, wie ein Looper oder eine Bandschlingenregelung bestehend aus einem durchhängenden Bandbereich zwischen Vorstraße und Coil-Speicher vorgesehen, die besonders für dünnere Vorbänder hilfreich ist.

### Bezugszeichenliste

- 1: CSP-Anlage
- 2: Gießmaschine
- 3: Casteraustritt
- 4: Schere
- 5: Strang
- 6: Ofen
- 7: Vorgerüstgruppe
- 8: Coil-Speicher
- 9: Richtrollensatz
- 10: Schere
- 11: Kantenheizer
- 12: Fertiggerüstgruppe
- 13: Induktionsofen
- 14: Kühlstrecke
- 15: Schere
- 16: Aufwickelhaspel
- 101: CSP-Anlage
- 102: Gießanlage, Gießmaschine
- 103: Strangkühlungsvorrichtung
- 104: Brammenreinigungsvorrichtung, Reinigungsvorrichtung
- 105: Brammenschere, Schere
- 106: Kaltstrangentsorgungsvorrichtung, -austragevorrichtung
- 107: Rollgangsabdeckung
- 108: Ofen, Ofenteile, Fähren
- 108a: Fähre, Fährengruppe
- 109: Bramme
- 110: Zunderwäscher
- 111: Vorgerüstgruppe, Vorstraße
- 112: Gerüst, Vorgerüst
- 113: Coil-Speicher
- 114: Rollgangsabdeckung
- 115: Richtrollen
- 116: Schere
- 117: Induktionsheizung
- 118: Fertiggerüstgruppe, Fertigstraße
- 119: Reinigungsvorrichtung, Zunderwäscher
- 120: Fertiggerüst
- 121: Heizung
- 122: Kühlstrecke
- 123: Band
- 124: Bandschere
- 125: Haspelanlage
- 201: CSP-Anlage
- 202: Gießanlage, Gießmaschine
- 204: Zunderwäscher
- 205: Schere
- 206: Entnahmevorrichtung
- 207: Rollgangsabdeckung
- 208: Ofen
- 211: Vorstraße, Vorgerüstgruppe
- 213: Coil-Speicher
- 215: Richtrollenvorrichtung
- 216: Bandschere
- 217: Induktionsofen
- 217a: Kantenheizung
- 218: Fertiggerüstgruppe
- 219: Zunderwäscher
- 222: Kühlstrecke
- 224: Schere
- 225: Haspelanordnung
- 301: CSP-Anlage
- 311: Vorgerüstgruppe
- 318: Fertiggerüstgruppe
- 401: CSP-Anlage
- 501: Coil-Speicher, Coilwickelstation
- 502: Vorband
- 503: Treiber
- 504: Biegeeinheit
- 505: Rollensatz
- 506: Verschiebeeinheit, Plattenhebeeinheit
- 507: Dämmhauben
- 510: Coil
- 511: Coilauge
- 512: Vorband
- 513: Vorband

## Patentansprüche

1. Kompakte flexible CSP-Anlage (1,101,201,301,401) wahlweise für Endlos-Semi-Endlos- und Batchbetrieb mit einer Gießmaschine (2,102,202), einer Vorgerüstgruppe (7,111,211) und einer Fertiggerüstgruppe (12,118,218),
**dadurch gekennzeichnet, dass** ein Coil-Speider (8, 113, 213, 501) vorhanden ist und dass für den Batch-Betrieb oder den Semi-Endlos-Betrieb der Coil-Speicher (8,113,213,501) in einen Rollgang integriert wird, welcher das von dem Vorgerüst kommende Vorband oder Bramme speichert, wobei im Falle des Endlosbetriebs der Coil-Speicher deaktiviert wird.

2. CSP-Anlage nach einem der vorhergehenden Ansprüche,
**dadurch gekennzeichnet,**
**dass** der Coil-Speicher (8,113,213,501) für eine erhöhte Aufnahmemenge an Vorband oder Bramme ausgelegt ist.

3. CSP-Anlage nach einem der vorhergehenden Ansprüche,
**dadurch gekennzeichnet,**
**dass** der Coil-Speicher (8,113,213,501) zur Aufnahme von zwei, drei oder mehr Coils ausgelegt ist.

4. CSP-Anlage nach einem der vorhergehenden Ansprüche,
**dadurch gekennzeichnet,**
**dass** auf einem Coil zwei, drei oder mehr Vorbänder oder Brammen zu Jumbo-Coils aufgewickelt werden.

5. CSP-Anlage nach einem der vorhergehenden Ansprüche,
**dadurch gekennzeichnet,**
**dass** der Coil-Speicher (8,113,213,501) thermisch isoliert und/oder beheizbar ist.

6. CSP-Anlage nach einem der vorhergehenden Ansprüche,
**dadurch gekennzeichnet,**
**dass** bei deaktiviertem Coil-Speicher (8,113,213,501) eine Rollgangsabdeckung zur besseren thermischen Isolation des Rollgangs eingesetzt wird.

7. CSP-Anlage nach einem der vorhergehenden Ansprüche,
**dadurch gekennzeichnet,**
**dass** das Aufwickeln der Jumbo-Coils in einer Coilbox oder Wickelöfen erfolgt.

8. CSP-Anlage nach einem der vorhergehenden Ansprüche,
**dadurch gekennzeichnet,**
**dass** die Erzeugung von Jumbo-Coils vorzugsweise während einer Walzunterbrechung in der Fertigstraße stattfindet.

9. CSP-Anlage nach einem der vorhergehenden Ansprüche,
**dadurch gekennzeichnet,**
**dass** die Jumbo-Coils zum Zwischenspeichern aus der Walzlinie entnommen, in einem Coilofen zwischengespeichert und/oder gegebenenfalls später wieder dem Walzprozess zugeführt werden.

10. CSP-Anlage nach einem der vorhergehenden Ansprüche,
**dadurch gekennzeichnet,**
**dass** abhängig von der Gießgeschwindigkeit die Anlage im Endlosmodus, Semi-Endlosmodus oder Batchbetrieb betrieben wird.

11. CSP-Anlage nach einem der vorhergehenden Ansprüche,
**dadurch gekennzeichnet,**
**dass** vor oder/und hinter dem Coil-Speicher eine Erwärmung des Vorbandes oder Bramme erfolgt.

12. CSP-Anlage nach einem der vorhergehenden Ansprüche,
**dadurch gekennzeichnet,**
**dass** die Erwärmung des Vorbandes oder Bramme vorzugsweise induktiv erfolgt.

13. CSP-Anlage nach einem der vorhergehenden Ansprüche,
**dadurch gekennzeichnet,**
**dass** die Energiezufuhr der Heizung in Abhängigkeit der gemessenen oder gerechneten Vorbandtemperatur in der Art durchgeführt wird, dass sich eine möglichst konstante Vorbandtemperatur über der Länge hinter der Heitzeinheit vor der Fertiggerüstgruppe einstellt.

14. CSP-Anlage nach einem der vorhergehenden Ansprüche,
**dadurch gekennzeichnet,**
**dass** mit der Induktionsheizung vorgesehen ist, bei Bedarf höhere Temperaturen vor der Fertiggerüstgruppe einzustellen, als die Gießmaschinenaustrittstemperatur.

15. CSP-Anlage nach einem der vorhergehenden Ansprüche,
**dadurch gekennzeichnet,**
**dass** zwischen der Vorgerüstgruppe und dem Coil-Speicher ein Looper oder ein Bandschlingenbereich angeordnet ist.

16. CSP-Anlage nach einem der vorhergehenden Ansprüche,
**dadurch gekennzeichnet,**
**dass** ein Treiber vor dem Coilspeicher angeordnet ist.

17. CSP-Anlage nach einem der vorhergehenden Ansprüche,
**dadurch gekennzeichnet,**
**dass** das Bewegen oder Überheben der Coils von der Auf- zur Abwickelstation während dem Aufwickeln erfolgt.

18. CSP-Anlage nach einem der vorhergehenden Ansprüche,
**dadurch gekennzeichnet,**
**dass** die Entsorgung des Kaltstrangs oder der Abtransport von geschnittenen Platten im Bereich des Coil-Speichers stattfindet.

## Claims

1. Compact flexible CSP plant (1, 101, 201, 301, 401) selectably for continuous, semi-continuous and batch operation, with a casting machine (2, 102, 202), a roughing stand group (7, 111, 211) and a finishing stand group (12, 118, 218), **characterised in that** a coil-store (8, 113, 213, 501) is present and that for the batch operation or semi-continuous operation the coil store (8, 113, 213, 501) is integrated in a roller path which stores the pre-strip or slab arriving from the roughing stand, wherein in the case of continuous operation the coil store is deactivated.

2. CSP plant according to the preceding claim, **characterised in that** the coil store (8, 113, 213, 501) is designed for an increased reception amount of pre-strip or slab.

3. CSP plant according to one of the preceding claims, **characterised in that** the coil store (8, 113, 213, 501) is designed for receiving two, three or more coils.

4. CSP plant according to any one of the preceding claims, **characterised in that** two, three or more pre-strips or slabs are wound to form jumbo coils on one coil.

5. CSP plant according to any one of the preceding claims, **characterised in that** the coil store (8, 113, 213, 501) is thermally insulated and/or heatable.

6. CSP plant according to any one of the preceding claims, **characterised in that** when the coil store (8, 113, 213, 501) is deactivated a roller path cover is used for improved thermal insulation of the roller path.

7. CSP plant according to any one of the preceding claims, **characterised in that** the coiling of the jumbo coils is carried out in a coil box or coiling oven.

8. CSP plant according to any one of the preceding claims, **characterised in that** the production of jumbo coils is preferably carried out during interruption of rolling in the finishing train.

9. CSP plant according to any one of the preceding claims, **characterised in that** the jumbo coils are removed from the rolling line for intermediate storage, intermediately stored in a coil oven and/or in a given case fed back later to the rolling process.

10. CSP plant according to any one of the preceding claims, **characterised in that** the plant is operated in continuous mode, semi-continuous mode or batch operation depending on the casting speed.

11. CSP plant according to any one of the preceding claims, **characterised in that** heating of the pre-strip or slab is carried out in front of and/or behind the coil store.

12. CSP plant according to any one of the preceding claims, **characterised in that** the heating of the pre-strip or slab is preferably carried out inductively.

13. CSP plant according to any one of the preceding claims, **characterised in that** the energy feed for the heating is carried out in dependence on the measured or calculated pre-strip temperature in such a manner that a pre-strip temperature which is as constant as possible is set over the length behind the heating unit in front of the finishing stand group.

14. CSP plant according to any one of the preceding claims, **characterised in that** provision is made by the induction heating to set, when required, higher temperatures in front of the finishing stand group than the casting machine exit temperature.

15. CSP plant according to any one of the preceding claims, **characterised in that** a looper or a strip looping region is arranged between the roughing stand group and the coil store.

16. CSP plant according to any one of the preceding claims, **characterised in that** a driver is arranged in front of the coil store.

17. CSP plant according to any one of the preceding claims, **characterised in that** the movement or lifting over of the coils from the coiling station to the uncoiling station is carried out during the coiling.

18. CSP plant according to any one of the preceding claims, **characterised in that** disposal of the cold strip or transport away of cut plates takes place in the region of the coil store.

## Revendications

1. Installation CSP flexible compacte (1, 101, 201, 301, 401) au choix pour l'exploitation en continu, en semi-continu et en discontinu, comprenant une machine à fondre (2, 102, 202), un agrégat de laminoirs dégrossisseurs (7, 111, 211) et un agrégat de laminoirs finisseurs (12, 118, 218), **caractérisée en ce qu'**un dispositif de stockage de bobines (8, 113, 213, 501) est présent et **en ce que**, pour l'exploitation en discontinu ou l'exploitation en semi-continu, le dispositif de stockage de bobines (8, 113, 213, 501) est intégré dans un train de rouleaux, qui stocke le pré-feuillard ou la brame provenant du laminoir dégrossisseur, le dispositif de stockage de bobines étant désactivé dans le cas d'une exploitation en continu.

2. Installation CSP selon l'une quelconque des revendications précédentes, **caractérisée en ce que** le dispositif de stockage de bobines (8, 113, 213, 501) est dimensionné pour une quantité élevée de réception de pré-feuillards ou de brames.

3. Installation CSP selon l'une quelconque des revendications précédentes, **caractérisée en ce que** le dispositif de stockage de bobines (8, 113, 213, 501) est dimensionné pour la réception de deux, trois bobines ou plus.

4. Installation CSP selon l'une quelconque des revendications précédentes, **caractérisée en ce que**, sur une bobine, peuvent venir s'enrouler deux, trois pré-feuillards ou brames ou plus, pour obtenir des bobines jumbo.

5. Installation CSP selon l'une quelconque des revendications précédentes, **caractérisée en ce que** le dispositif de stockage de bobines (8, 113, 213, 501) est équipé d'une isolation thermique et/ou peut être chauffé.

6. Installation CSP selon l'une quelconque des revendications précédentes, **caractérisée en ce que**, lorsque le dispositif de stockage de bobines (8, 113, 213, 501) est désactivé, on incorpore un revêtement de train de rouleaux pour améliorer l'isolation thermique du train de rouleaux.

7. Installation CSP selon l'une quelconque des revendications précédentes, **caractérisée en ce que** l'enroulement de la bobine jumbo a lieu dans une cage à bobine ou dans des fours de bobinage.

8. Installation CSP selon l'une quelconque des revendications précédentes, **caractérisée en ce que** la formation d'une bobine jumbo a lieu de préférence au cours d'une interruption du laminage dans la ligne de finition.

9. Installation CSP selon l'une quelconque des revendications précédentes, **caractérisée en ce que** les bobines jumbo sont retirées de la ligne de laminage à des fins d'entreposage intermédiaire, sont entreposées de manière intermédiaire dans un four de bobinage et/ou sont recyclées le cas échéant dans le processus de laminage.

10. Installation CSP selon l'une quelconque des revendications précédentes, **caractérisée en ce que**, en fonction de la vitesse de coulée, l'installation est exploitée dans le mode en continu, dans le mode en semi-continu ou en discontinu.

11. Installation CSP selon l'une quelconque des revendications précédentes, **caractérisée en ce que**, avant et/ou après le dispositif de stockage de bobines, a lieu un chauffage du pré-feuillard ou de la brame.

12. Installation CSP selon l'une quelconque des revendications précédentes, **caractérisée en ce que** le chauffage du pré-feuillard ou de la brame a lieu de préférence par induction.

13. Installation CSP selon l'une quelconque des revendications précédentes, **caractérisée en ce que** l'apport d'énergie du chauffage est mis en oeuvre, en fonction de la température mesurée ou calculée du pré-feuillard, de telle sorte que l'on obtient une température du pré-feuillard la plus constante possible sur le parcours s'étendant derrière l'unité de chauffage avant l'agrégat de laminoirs finisseurs.

14. Installation CSP selon l'une quelconque des revendications précédentes, **caractérisée en ce qu'**on prévoit, avec le chauffage par induction, la possibilité de régler en cas de nécessité avant l'agrégat de laminoirs finisseurs, des températures supérieures à la température de sortie de la machine à fondre.

15. Installation CSP selon l'une quelconque des revendications précédentes, **caractérisée en ce que**, entre l'agrégat de laminoirs dégrossisseurs et le dispositif de stockage de bobines, est disposé un boucleur ou une zone d'enroulement de feuillard.

16. Installation CSP selon l'une quelconque des revendications précédentes, **caractérisée en ce qu'**un propulseur est disposé devant le dispositif de stockage de bobines.

17. Installation CSP selon l'une quelconque des revendications précédentes, **caractérisée en ce que**, le déplacement ou le relevage de la bobine entre le poste d'enroulement et le poste de déroulement a lieu au cours de l'enroulement.

18. Installation CSP selon l'une quelconque des revendications précédentes, **caractérisée en ce que** l'élimination de la fausse barre ou l'évacuation des plaques découpées a lieu dans la zone du dispositif de stockage de bobine.
